(19) Europäisches Patentamt
European Patent Office
Office européen des brevets

(11) EP 2 407 732 A2

(12) EUROPÄISCHE PATENTANMELDUNG

(43) Veröffentlichungstag:
18.01.2012 Patentblatt 2012/03

(51) Int Cl.:
F24J 3/08 (2006.01)

(21) Anmeldenummer: 11005812.0

(22) Anmeldetag: 15.07.2011

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME

(30) Priorität: 15.07.2010 DE 102010027249

(71) Anmelder: ARCADIS Deutschland GmbH
64293 Darmstadt (DE)

(72) Erfinder: Finkenstein, Florian
04275 Leipzig (DE)

(74) Vertreter: Rothkopf, Ferdinand
ROTHKOPF
Patent- und Rechtsanwälte
Isartorplatz 5
80331 München (DE)

(54) **Verfahren und Vorrichtung zur Nutzung thermischer Energie**

(57) Ein Verfahren zur Nutzung thermischer Energie aus einem Hohlraum (12) im Erdreich (26) mittels eines in dem Hohlraum (12) angeordneten rohrförmigen Medienleiter (20), in dem ein Medium zum Aufnehmen von Wärmeenergie aus dem den Hohlraum (12) umgebenden Erdreich (26) und/oder einem den Hohlraum (12) ausfüllenden Fluid strömt, umfasst die Schritte: Anordnen des Medienleiters (20) an einem Inliner (22), Ausbringen des Inliners (22) in den Hohlraum (12) mitsamt des Medienleiters (20), Anlegen des Inliners (22) flächig an eine Begrenzungsfläche (14, 16, 18) des Hohlraums (12) und Halten des Medienleiters (20) an der Begrenzungsfläche (18) des Hohlraums (12) mittels des Inliners (22).

Fig. 1

**Beschreibung**

Hintergrund der Erfindung

Die Erfindung betrifft ein Verfahren und eine Vorrichtung zur Nutzung thermischer Energie, insbesondere diffuser thermischer und/oder geothermischer Energie, aus einem Hohlraum. Die thermische Energie wird insbesondere zur Beheizung von Gebäuden und dergleichen genutzt.

Zur Nutzung geothermischer Energie werden gewöhnlich Tiefbohrungen im Erdreich mittels Bohrtürmen oder Bohrmastanlagen durchgeführt. Bei den Bohreinrichtungen ist ein Bohrkopf mit einem auf dem Erdreich angeordneten Drehantrieb durch einen Bohrstrang verbunden. Der Bohrstrang umfasst eine Vielzahl von Stangen, Zentriervorrichtungen, Motoren usw., die je nach Bohrlochtiefe ergänzt werden. Der Bohrstrang hängt an einem System aus Haken, einem Flaschenzug, einer Seilrolle und einer Seilwinde, das an einem Bohrmast angeordnet ist. Derartige Bohrungen sind entsprechend den erforderlichen Gerätschaften und dem Arbeitsaufwand vergleichsweise kostspielig. Ferner können derartige Tiefbohrungen aufgrund der Konstruktionsweise der Bohranlagen nur nahezu senkrecht in das Erdreich ausgeführt werden. Wenn dann aber nach einer gewissen Bohrtiefe festgestellt wird, dass die tiefer liegende Bohrschicht nicht durchbohrt werden kann, muss die Bohrung abgebrochen und gegebenenfalls eine vollständig neue Bohrung angefertigt werden. Weiterhin ist eine Tiefbohrung mit Lärm verbunden und erfordert viel Platz für die erforderlichen Gerätschaften. Ferner müssen meistens mindestens zwei Bohrungen durchgeführt werden, wobei eine Bohrung zur Entnahme des erhitzten Dampfes und die weitere Bohrung zur Rückführung des Kondensats dient. Eine Tiefbohrung kann daher nur schwer in der Nähe von bewohnten Gebieten ausgeführt werden, zu denen die geothermische Energie bevorzugt hingeleitet wird.

Zugrundeliegende Aufgabe

Es ist eine Aufgabe der vorliegenden Erfindung, ein Verfahren und eine Vorrichtung zur Nutzung thermischer Energie anzugeben, welche es erlauben, die Kosten für die Gewinnung von Energie aus dem Erdreich zu reduzieren.

Erfindungsgemäße Lösung

Die Aufgabe wird erfindungsgemäß durch ein Verfahren und eine Vorrichtung gelöst, bei denen in einem Hohlraum, insbesondere einem für andere Zwecke als der geothermischen Energiegewinnung bestehenden bzw. genutzten oder herzustellenden Hohlraum, etwa einem Abwasserkanal, mindestens ein rohrförmiger Medienleiter angeordnet wird. Durch den Medienleiter wird ein Medium geleitet, das Wärmeenergie aus dem den Hohlraum umgebenden Erdreich und/oder einem den Hohlraum ausfüllenden Fluid aufnehmen kann. Der Medienleiter wird in dem Hohlraum mittels eines Inliners an der Begrenzungsfläche des Hohlraums gehalten.

Erfindungsgemäß wird Wärmeenergie durch einen Hohlraum hindurch dem Erdreich und/oder einem den Hohlraum ausfüllenden Fluid, beispielsweise Luft, entzogen und die entzogene Wärmeenergie mittels eines strömenden Mediums an einen gewünschten Ort transportiert. Kosten für eine separate Bereitstellung einer Bohrung oder dergleichen entfallen daher gemäß der Erfindung.

Zum Halten des rohrförmigen Medienleiters dient gemäß der Erfindung ein Inliner bzw. ein folienartiges oder schichtartiges flächiges Element, der bzw. das an der Begrenzungsfläche des Hohlraums flächig angelegt wird. Mit dem Inliner ist der rohrförmige Medienleiter auf einfache Weise auch über seine gesamte Länge hinweg eng an die Begrenzungsfläche angelegt. Die Lage des Medienleiters ist dabei dauerhaft stabil. Der Medienleiter kann mit dem Inliner gerade in bestehenden Kanälen einfach nachgerüstet werden. Die Wärmeentnahme erfolgt mit dem derart von einem Inliner gehaltenen Medienleiter gezielt von der Begrenzungsfläche aus in das den Hohlraum umgebende Erdreich. Der Inliner ist besonders für Hohlräume mit glatten Innenflächen geeignet, wie sie bei Kanälen in der Regel vorzufinden sind. Da derartige Kanäle sich meist in bewohntem Gebiet befinden, kann die Entfernung vom Medienleiter bis zum Nutzer der abgeführten Energie gering gehalten werden. Darüber hinaus ist die erfindungsgemäße Vorrichtung besonders gut dazu geeignet, Wärmeenergie auch direkt aus dem im Hohlraum vorhanden, insbesondere strömenden, Fluid zu entziehen.

Mit dem erfindungsgemäßen Inliner kann darüber hinaus auch zusätzlich eine Stabilisierung, Abdichtung und Sanierung des zugehörigen Hohlraums selbst durchgeführt werden.

Vorteilhaft ist der Hohlraum ein künstlicher Hohlraum, wie insbesondere ein Abwasserkanal. Künstliche Hohlräume sind im Allgemeinen derart ausgestaltet, dass sie Begrenzungsflächen aufweisen, die vergleichsweise glatt sind. Dadurch lässt sich ein rohrförmiger Medienleiter zum Ableiten von Wärmeenergie aus dem umgebenden Erdreich gut an den Begrenzungsflächen eines derartigen Hohlraums anbringen. Zudem weisen künstliche Hohlräume im Allgemeinen eine Röhrenstruktur auf, an die der rohrförmige Medienleiter leicht angepasst werden kann. Weiterhin sind derartige künstliche Hohlräume bereits unterhalb von bewohnten Gebieten vorhanden und können daher genutzt werden, ohne dass Bohrungen oder andere Grabungen und dergleichen vorgenommen werden müssen.

In einer bevorzugten Ausführungsform der Erfindung wird der rohrförmige Medienleiter mittels des Inliners daher gezielt wärmeleitend an den Begrenzungsflächen des Hohlraums angeordnet. Die Begrenzungsflächen sind die Decke, die Seitenwände und der Boden des Hohlraums. Die Wärmeenergie wird in einem Hohlraum im Erdreich nur geringfügig in der Luft und hauptsächlich in den Decken, Wänden und Böden gespeichert. Daher ist es vorteilhaft, den Hohlräumen die in den Begrenzungsflächen gespeicherte Wärmeenergie zu entziehen. Vorteilhafterweise wird als Hohlraum ein Kanal, insbesondere ein Abwasserkanal und dort eine Sammelleitung mit einem Durchmesser zwischen 150 cm und 500 cm, besonders bevorzugt zwischen 200 cm und 300 cm genutzt. Abwasserkanäle führen die in dem Abwasser gespeicherte Wärmeenergie mit sich. Weiterhin wird die in dem Abwasser gespeicherte Wärmeenergie vorteilhaft an die Begrenzungsflächen des Abwasserkanals abgegeben. Bei den genannten Durchmessern kann mit dem erfindungsgemäßen Inliner der Medienleiter derart an den Begrenzungsflächen angelegt werden, dass sich besonders hohe Wirkungsgrade hinsichtlich der Energieübertragung auf das Medium ergeben. Besonders vorteilhaft besteht dabei eine Mediengeschwindigkeit von zwischen 1 und 5 m/sec (Meter pro Sekunde) in dem Medienleiter.

Die vorstehenden Hohlräume weisen wie bereits erwähnt bevorzugt Begrenzungsflächen mit einer glatten Oberfläche auf. Die Oberflächenkontur des rohrförmigen Medienleiters ist vorteilhaft an die Oberflächenkontur mindestens einer Begrenzungsfläche angepasst, sodass sie parallel zueinander liegen und einander großflächig berühren. Dadurch wird eine große Wärmeübertragungsfläche genutzt.

Vorzugsweise ist der Medienleiter ein Rohr und besonders bevorzugt ein Flachrohr, d.h. seine Breite ist im Verhältnis zur Höhe groß. Das Flachrohr absorbiert die Wärmeenergie einer Begrenzungsfläche des Hohlraums über seine an der Fläche anliegende Breitseite und seine Länge. Daher ist es vorteilhaft, die Höhe des Rohrs gering zu halten. Zudem ragt ein derartiges Flachrohr nicht weit ins Innere des Hohlraums und stellt somit keine Behinderung für die weitere Nutzung des Hohlraums dar. Besonders bevorzugt sind an dem Inliner drei solcher Flachrohre in Umfangsrichtung nebeneinander angeordnet.

Um eine gute Wärmeübertragung zu gewährleisten, umfasst der rohrförmige Medienleiter bevorzugt ein Rohr aus Kunststoff. Kunststoffe sind im Allgemeinen gute Wärmeleiter, sodass die Wärmeenergie aus dem Erdreich durch die Wandung des Kunststoffrohrs hindurch zu dem Fluid geleitet werden kann. Insbesondere thermoplastische Kunststoffe und Duroplaste sind geeignet, als Wärmeleiter zu dienen. Vorzugsweise besteht das Rohr aus Polyethylen.

Alternativ oder zusätzlich umfasst der rohrförmige Medienleiter das Material Stahl, das besonders belastbar und gut geeignet ist, Wärmeenergie zu leiten. Auch Aluminium ist als guter Wärmeleiter hervorragend für den Medienleiter geeignet. Bevorzugt umfasst der Medienleiter ein Mehrschichtverbundrohr. Dieses ist vorteilhaft mit 3 oder 5 Schichten gestaltet. Der Aufbau der 3-schichtigen Verbundrohre von Innen nach Außen ist folgender: vernetztes Polyethylen, Aluminium, Polyethylen hoher Dichte. Zwischen Aluminium und Polyethylen kann vorteilhaft noch jeweils eine Haftvermittlerschicht angeordnet sein. Vorteile der Verbundrohre sind eine leichte Biegsamkeit im Gegensatz zu Kunststoffrohren bei gleichzeitiger Formstabilität, ihr geringes Gewicht und die kostengünstige Herstellung. Zudem sind die Mehrschichtverbundrohre sauerstoffundurchlässig, somit kann eine Korrosion von Vorrichtungen, wie beispielsweise Heizkörpern oder Pumpen verhindert werden, zu denen das in dem Medienleiter strömende Fluid hingeleitet wird.

In einer bevorzugten Ausführungsform der Erfindung ist an dem Medienleiter teilweise eine Schicht aus einem Isoliermaterial angeordnet. Vorteilhaft wird das Isoliermaterial außenwandig an dem Medienleiter angeordnet. Das Isoliermaterial kann ferner zugleich als ein ästhetisches Element eingesetzt werden. In einer weiteren vorteilhaften Ausführungsform wird das Isoliermaterial inwandig in dem Medienleiter angeordnet. Bevorzugt wird das Isoliermaterial an einer Fläche des Medienleiters angeordnet, die nicht in Kontakt zu einer Begrenzungsfläche des Hohlraums steht. Dadurch wird ein Wärmeaustausch mit einer Umgebung des Medienleiters, die keine Begrenzungsfläche ist, eingeschränkt bzw. verhindert. Das Isoliermaterial ist vorteilhafterweise als eine Dämmschicht aus Polyurethan oder

(Bläh-) Beton gestaltet. Für einen besonders guten Wärmeübergang ist es günstig, den Medienleiter mit einem insbesondere mineralischen Mörtel einzuputzen und/oder mittels Spritzbeton zu bekleiden.

In einer weiteren vorteilhaften Ausführungsform wird an dem Medienleiter teilweise eine Schicht aus einem Wärme leitenden Material angeordnet. Das Wärme leitende Material wird bevorzugt an Flächen angeordnet, die in Kontakt mit einer Begrenzungsfläche des Hohlraums stehen. Die Schicht aus Wärme leitenden Material wird vorteilhaft verwendet, um einen Raum auszufüllen, der zwischen dem Medienleiter und den Begrenzungsflächen gebildet sein kann. Dadurch wird gewährleistet, dass sich Medienleiter und Begrenzungsfläche zumindest mittels der Schicht aus Wärme leitendem Material Wärme leitend berühren.

Vorteilhaft wird das Fluid durch das Rohr gepumpt. Mittels einer steuerbaren Pumpe kann eine vorbestimmte Strömungsgeschwindigkeit des Fluids eingestellt werden, sodass die Übertragungsleistung an Wärmeenergie gesteuert werden kann. Die vorbestimmte Strömungsgeschwindigkeit liegt insbesondere im Bereich von zirka 1 bis 5 m/s.

In einer bevorzugten Ausführungsform der Erfindung wird das Fluid mindestens einem Wärmespeicher zugeführt. Die Nutzung von Hohlräumen wie Kanälen, aber auch Bahntunneln oder Straßentunneln variiert nach Tageszeit. Morgens und abends ist die Nutzung stärker als zu anderen Tageszeiten. Auch ist zu nächtlicher Stunde die Nutzung in der Regel geringer als am Tage. Daher wird den Begrenzungsflächen des Hohlraums tagsüber mehr Wärmeenergie zugeführt als Nachts, sodass auch die Wärmeabführung mittels des durch den Medienleiter fließenden Fluids variiert. Durch die Zuführung des Fluids zu mindestens einem Wärmespeicher kann dem Verbraucher weitgehend unabhängig von der Wärmeabführung Energie zugeführt werden. Darüber hinaus wirkt das den Hohlraum umgebende Material selbst als ein Puffer bzw. Wärmeenergiespeicher, der ausgeglichen abführbare Wärme bereithält.

Das Fluid ist vorteilhafterweise Wasser. Wasser ist ein guter Wärmeträger und gleichzeitig in der Lage, Wärmeenergie lange zu speichern. Zudem ist es in großer Menge vorhanden und preisgünstig. Dem Wasser wird vorteilhaft ein Frostschutzmittel zugesetzt. Dadurch ist es möglich eine Wärmepumpe mit einer Rücklauftemperatur von kleiner als 0°C zum Abführen der Wärmeenergie aus dem den Hohlraum umgebenen Material und/oder dem den Hohlraum ausfüllenden Fluid einzusetzen.

Bevorzugt wird mindestens eine Zu- und/oder Ableitung mit dem Rohr verbunden. Durch die Zuleitung wird Fluid zu dem Mediumleiter zugeleitet, während dem Mediumleiter durch die Ableitung Fluid entnommen wird. Die Zu- und/oder Ableitung kann aus den gleichen Materialien bestehen wie der Mediumleiter. Bevorzugt ist das Fluid, das dem Mediumleiter zugeleitet wird, Wasser mit einer Temperatur von 1 °C bis 10°C, bevorzugt 5 °C.

Vorteilhaft wird die Zu- und/oder Ableitung mit einem Isoliermaterial ausgekleidet oder ummantelt. Die Isolierung ist insbesondere bei der Ableitung vorteilhaft und dient dazu, das Fluid, das durch die Ableitung strömt, von der Umgebung zu isolieren.

Der Medienleiter ist vorzugsweise an dem Inliner an der der Begrenzungsfläche des Hohlraums zugewandten Seite angeordnet. Der Medienleiter weist dann einen geringen Abstand zu dem den Hohlraum umgebenden Material, insbesondere das Erdreich, auf, so dass ein guter Wärmeübergang von diesem Material auf das Medium im Medienleiter gewährleistet ist. Mit dieser Anordnung drängt ferner der Inliner den Medienleiter gegen die Begrenzungsfläche und klemmt ihn in dieser Lage ein, so dass der Medienleiter am Inliner fast kaum befestig sein muss. Wenn gezielt ein besonders guter Wärmeübergang von einem im Hohlraum befindlichen Fluid auf das Medium angestrebt wird, ist es vorteilhaft, den Medienleiter an der von der Begrenzungsfläche abgewandten Seite des Inliners anzuordnen.

Zum Ausbringen des Inliners in den Hohlraum ist es von Vorteil, wenn der Inliner ein Schlauch ist, der im Querschnitt betrachtet insbesondere U-förmig gefaltet werden kann. Der derart gefaltete Schlauch kann gerade in einen rohrförmigen Hohlraum, wie einen Abwasserkanal, sehr einfach eingebracht werden.

Zum Anlegen des Inliners flächig an die Begrenzungsfläche wird dieser vorzugsweise ausgehend von seiner gefalteten Lage mittels eines heißen Gases, insbesondere heißem Dampf, aufgeblasen. Mit dem Aufblasen legt sich der Inliner flächig gegen die Begrenzungsfläche des Hohlraums und stellt damit einen engen, wärmeleitenden Kontakt zu der Begrenzungsfläche her. Der Inliner ist dabei besonders bevorzugt aus einem Material gestaltet, dass beim Erwärmen weicher und flexibler, umgekehrt aber beim Abkühlen wieder steif und stabil wird. Der Inliner kann dann unter Druck abgekühlt werden, wodurch er seine Stabilität und stützende Wirkung erreicht und zugleich einen engen Kontakt zu den Begrenzungsflächen dauerhaft beibehält.

## Kurzbeschreibung der Zeichnungen

Nachfolgend wird ein Ausführungsbeispiel einer erfindungsgemäßen Vorrichtung und des zugehörigen Verfahrens anhand der beigefügten schematischen Zeichnungen näher erläutert. Es zeigt:

Fig. 1    eine stark vereinfachte Darstellung einer Vorrichtung zur Durchführung des erfindungsgemäßen Verfahrens, und

Fig. 2    einen vergrößerten Querschnitt einer Vorrichtung zur Durchführung des erfindungsgemäßen Verfahrens.

## Detaillierte Beschreibung des Ausführungsbeispiels

Eine Vorrichtung 10 zur Nutzung thermischer Energie befindet sich in einem Hohlraum 12 in Form eines Abwasserkanals eines nicht weiter dargestellten Kanalnetzes. Der Abwasserkanal ist rohrförmig mit einem im Wesentlichen kreisrunden Querschnitt gestaltet und umfasst als Begrenzungsflächen eine Decke 14 sowie Seitenwände 16 und einen Boden 18.

Zur Nutzung der im Hohlraum 12 vorhandenen thermischen Energie sind in dem Hohlraum 12 drei Medienleiter 20 angeordnet, die jeweils als ein Rohr aus Polyethylen mit ellipsenförmigem Querschnitt gestaltet sind. Die drei Medlenleiter 20 dienen zum Leiten eines Mediums, vorliegend Wasser, das Wärmeenergie von dem den Hohlraum 12 umgebenden Wänden und Erdreich und/oder einem den Hohlraum 12 ausfüllenden Fluid, vorliegend Abwasser, aufnehmen kann.

Die Medienleiter 20 sind in dem Hohlraum 12 mittels eines Inliners 22 gehalten, der als gefalteter Schlauch in den Hohlraum 12 eingebracht und nachfolgend mit heißem Dampf aufgeblasen worden ist. Vor dem Einbringen in den Hohlraum 12 sind an dem Inliner 22 die drei Medienleiter 20 mittels eines Klebeverfahrens an der den Begrenzungsflächen zugewandten Seite des Inliners 22 angebracht worden. Nach dem Aufblasen ist der Inliner 22 unter Druck von innen abgekühlt worden, wodurch er sich verfestigt und versteift hat.

Der derart eingebrachte und aufgeblasene Inliner 22 drängt die Medienleiter 20 gegen den Boden 18 und hält sie ortsfest in dieser Lage.

Die Medienleiter 20 sind wie oben erwähnt im Querschnitt im Wesentlichen ellipsenförmig gestaltet. Mit diesen elliptischen Querschnitten wird der Wärmeübergang von den Begrenzungsflächen zum Medium in den Medienleitern 20 verbessert. Der Wärmeübergang wird neben der Temperaturdifferenz und dem verwendetem Material vom Wärmeübergangskoeffizienten $\alpha$ bestimmt. Dieser beschreibt das Vermögen einer Flüssigkeit oder eines Gases, von einer Stoffoberfläche Energie abzuführen oder an die Oberfläche Energie abzugeben. Dabei ist der Wärmeübergangskoeffizient $\alpha$ abhängig von der charakteristischen Länge ($l_{ch}$), der Wärmeleitfähigkeit des Fluids ($\lambda$) und der Nusselt-Zahl (Nu), die wiederum abhängig von der Prandl- und der Reynoldszahl ist.

Zur Berechnung ergibt sich folgender Zusammenhang:

$$\alpha = \lambda / l_{ch} * Nu \qquad [W/m^2K].$$

Aus der Dimension lässt sich ableiten, dass die Intensität des Wärmeübergangs bei gleicher Temperaturdifferenz und gleicher Übertragungsfläche umso größer ist, je größer der Zahlenwert für $\alpha$ wird. Die zur Berechnung des Wärmeübergangs benötigte Nusselt-Zahl ist eine dimensionslose Kennzahl, die die Verbesserung der Wärmeübertragung einer Oberfläche angibt. Dabei werden die real existierenden Verhältnisse mit einer theoretischen ruhenden Schicht vergleichen, in der Wärme nur durch reine Wärmeleitung übertragen wird. Es ergibt sich eine vergleichbare dimensionslose Kennzahl mit der Aussage, dass bei gleichem geometrischem Aufbau auch die Wärmeübertragung gleich ist.

Zur Berechnung von $\alpha$ sind zwei Größen geometrieabhängig:

1. Die charakteristische Länge ($l_{ch}$) ist bei Rohren der Innendurchmesser (di), bei Ellipsen als Modellfall für ein Flachrohr ein Verhältnis von Querschnittsfläche und Umfang (4A/u). Es ergeben sich hier für gleiche Querschnittsflächen von Kreis und Ellipse annähern gleiche Werte für die charakteristische Länge.

2. Die Berechnung der Nusselt-Zahl ist vom jeweiligen Modellfall abhängig. Für ein durchströmtes Rohr ergibt sich der einfache Modellfall „Rohr innen", für ein durchströmtes Flachrohr ist der Modellfall komplizierter und liegt zwischen "Platte längs" und "Rohr innen". Bei einem mit einer Pumpe durchströmten Rohr, also bei erzwungener Konvektion, ist die mittlere Nusselt-Zahl bei einem elliptischen Querschnitt großer, als die eines kreisrunden Querschnitts. Das ist durch die unterschiedlichen Querschnittsformen begründet. Bei einem kreisrunden Querschnitt ist die Reynoldszahl bei gleicher Strömungsgeschwindigkeit kleiner, als die eines elliptischen Querschnitts, weil eine unregelmäßigere Oberfläche ein turbulenteres Strömungsverhalten und damit eine größere Reynoldszahl zur Folge hat. Aufgrund dieser physikalischen Verhältnisse ist die Nusselt-Zahl bei einem Flachrohr größer, als bei einem kreisrunden Rohr.

Wie bereits ausgeführt hängt der Wärmeübergangskoeffizient linear von der Nusselt-Zahl ab. Vergleicht man nun die die Wärmeübergangskoeffizienten für ein Flach - und ein kreisrundes Rohr, so ergibt sich bei einer größeren Nusselt-Zahl auch ein größerer Wärmeübergangskoeffizient, was folglich eine bessere Wärmeübertragung bei Flachrohren bedeutet.

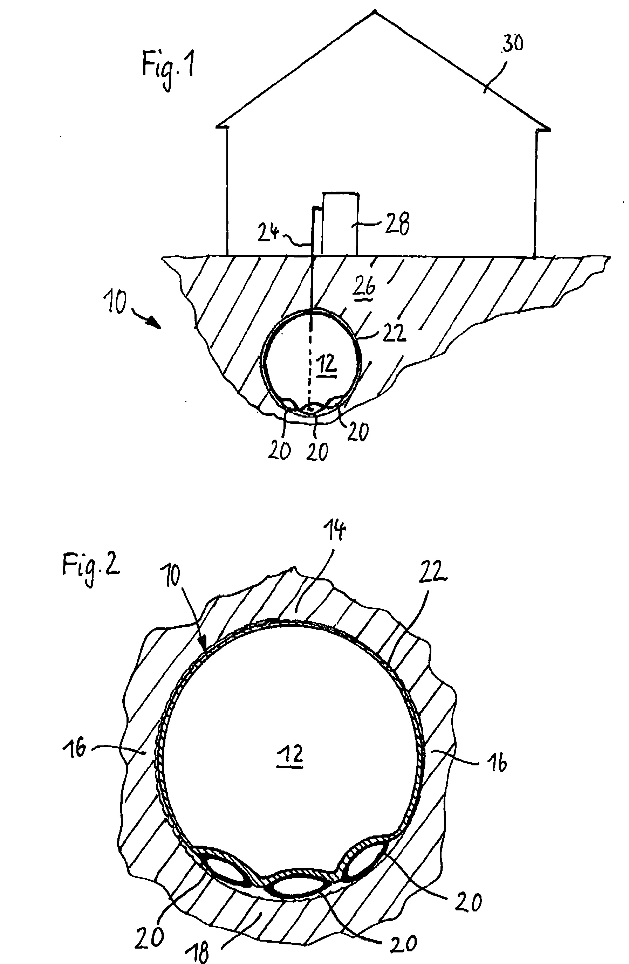

Von den derartigen Medienleitern 20 führt eine Ableitung 24, die mit einem Isoliermaterial ausgekleidet ist, vertikal durch die Decke 14 sowie durch ein den Hohlraum umgebendes Erdreich 26, das insbesondere bezogen auf Fig. 1 über der Decke 14 des Hohlraums 12 liegt. Die Ableitung 24 führt zu einer Heizanlage 28 in Form einer Wärmepumpe eines Abnehmers 30 in Gestalt eines Hauses.

Durch die Medienleiter 20 wird mittels einer Pumpenanlage (nicht dargestellt) Wasser gepumpt. Das Wasser hat zunächst eine geringere Temperatur als das den Hohlraum 12 umgebende Erdreich 26 und nimmt daher Wärmeenergie, die im Boden 18 und in einem durch den Hohlraum 12 im Inneren des Inliners 22 strömenden Abwasser (nicht dargestellt) gespeichert ist, im Vorbeifließen auf.

Abschließend sei angemerkt, dass sämtlichen Merkmalen, die in den Anmeldungsunterlagen und insbesondere in den abhängigen Ansprüchen genannt sind, trotz dem vorgenommenen formalen Rückbezug auf einen oder mehrere bestimmte Ansprüche, auch einzeln oder in beliebiger Kombination eigenständiger Schutz zukommen soll.

**Patentansprüche**

1. Verfahren zur Nutzung thermischer Energie aus einem Hohlraum (12) im Erdreich (26) mittels eines in dem Hohlraum (12) angeordneten rohrförmigen Medienleiter (20), in dem ein Medium zum Aufnehmen von Wärmeenergie aus dem den Hohlraum (12) umgebenden Erdreich (26) und/oder einem den Hohlraum (12) ausfüllenden Fluid strömt, mit den Schritten:

Anordnen des Medienleiters (20) an einem Inliner (22),
Ausbringen des Inliners (22) in den Hohlraum (12) mitsamt des Medienleiters (20),
Anlegen des Inliners (22) flächig an eine Begrenzungsfläche (14, 16, 18) des Hohlraums (12) und
Halten des Medienleiters (20) an der Begrenzungsfläche (18) des Hohlraums (12) mittels des Inliners (22).

**2.** Verfahren gemäß Anspruch 1,
bei dem beim Anordnen des Medienleiters (20) an dem Inliner (22) der Medienleiter (20) an der der Begrenzungsfläche (14, 16, 18) des Hohlraums (12) zugewandten Seite des Inliners (22) angeordnet wird.

**3.** Verfahren gemäß Anspruch 1 oder Anspruch 2,
bei dem beim Ausbringen des Inliners (22) in den Hohlraum (12) mitsamt des Medienleiters (20) der Inliner (22) im Querschnitt betrachtet U-förmig gefaltet wird.

**4.** Verfahren gemäß einem der Ansprüche 1 bis 3,
bei dem beim Anlegen des Inliners (22) flächig an eine Begrenzungsgfläche (14,16,18) des Hohlraums (12) der Inliner (22) mit heißem Gas, insbesondere mit heißem Dampf, aufgeblasen wird.

**5.** Verfahren gemäß einem der Ansprüche 1 bis 4,
bei dem beim Anlegen des Inliners (22) flächig an eine Begrenzungsfläche (14,16,18) des Hohlraums (12) der Inliner (22) unter Innendruck abgekühlt wird.

**6.** Vorrichtung (10) zur Nutzung thermischer Energie aus einem Hohlraum (12) im Erdreich (26), die einen Medienleiter (20) zum Leiten eines Mediums umfasst, das Wärmeenergie von dem den Hohlraum (12) umgebenden Erdreich (26) und/oder einem den Hohlraum (12) ausfüllenden Fluid aufnehmen kann, und ein Mittel zum Halten des Medienleiters (20) in dem Hohlraum (12) umfasst, und bei der das Mittel zum Halten des Medienleiters (20) in dem Hohlraum (12) mit einem Inliner (22) gestaltet ist, der flächig an eine Begrenzungsfläche (14,16,18) des Hohlraums (12) anlegbar ist.

**7.** Vorrichtung gemäß Anspruch 6,
bei dem der Inliner (22) ein faltbarer Schlauch ist.

**8.** Vorrichtung gemäß Anspruch 6 oder 7,
bei dem der Inliner (22) mittels heißen Gases aufblasbar gestaltet ist.

**9.** Vorrichtung gemäß einem der Ansprüche 6 bis 8,
bei dem der Inliner (22) sich beim Abkühlen versteifend gestaltet ist.

**10.** Vorrichtung gemäß einem der Ansprüche 6 bis 9,
bei der der rohrförmige Medienleiter (20) aus Kunststoff, bevorzugt thermoplastischen Kunststoff, noch bevorzugter Polyethylen, hergestellt ist.

Fig. 1

Fig. 2